# EUROPÄISCHE PATENTSCHRIFT

(11) **EP 0 339 351 B1**
(45) Veröffentlichungstag und Bekanntmachung des Hinweises auf die Patenterteilung: **06.10.1993**
(21) Anmeldenummer: 89106328.1
(22) Anmeldetag: 10.04.1989
(51) Int. Cl.: H04M 19/02

(54) **Einrichtung zum Schalten der Rufwechselspannung an Teilnehmeranschlussleitungen**
Connection device for alternative call current at subscriber connection lines
Dispositif de connexion du courant alternatif d'appel à des lignes de raccordement d'abonné

(30) Priorität: 29.04.1988 DE 3814661
(43) Veröffentlichungstag der Anmeldung: 02.11.1989
(73) Patentinhaber: Siemens Nixdorf Informationssysteme Aktiengesellschaft, 33102 Paderborn (DE)
(72) Erfinder: Nientiedt, Robert, D-4795 Delbrück-Boke (DE); Keyhani, Michael, D-4796 Salzkotten (DE); Reimann, Karl-Rudolf, D-4795 Delbrück (DE)
(74) Vertreter: Fuchs, Franz-Josef, Dr.-Ing.

(56) Entgegenhaltungen:
- FR-A- 2 366 756
- US-A- 3 720 793
- IBM TECHNICAL DISCLOSURE BULLETIN. vol. 16, no. 4, September 73, NEW YORK US Seiten 1173 - 1174; PATTEN: "ELECTRONIC HYBRID TELEPHONE LINE PACK"

## Beschreibung

Die Erfindung betrifft eine Einrichtung zum Schalten der Rufwechselspannung an Teilnehmeranschlußleitungen in Telekommunikationsanlagen mit optisch gekoppelten Halbleiterschaltern.

Eine Einrichtung dieser Art ist aus IBM Technical Disclosure Bulletin, Vol. 16, No. 4, September 1973, Seiten 1173 und 1174, bekannt. Bei ihr dienen als optisch gekoppelte Halbleiterschalter Thyristoren zum Umschalten der Teilnehmeranschlußleitung zwischen der Gleichstromspeisung und der Rufwechselspannung. Wenn die von einem Generator gelieferte Rufwechselspannung an die Teilnehmeranschlußleitung angeschaltet wird, ist die Gleichstromspeisung abgeschaltet. Diese in Telekommunikationsanlagen übliche Maßnahme verhindert, daß Rückwirkungen der eingespeisten Rufwechselspannung auf die Signalwege auftreten, über die Sprachwechselspannungen der Teilnehmeranschlußleitung zugeführt werden. Die Verwendung von Thyristoren als Halbleiterschalter hat dabei den Vorteil, daß mechanische Relaiskontakte überflüssig sind und eine längere Lebensdauer der Gesamtschaltung gewährleistet ist.

In Telekommunikationsanlagen der bisher üblichen Art müssen besondere Maßnahmen zum Ableiten von Störimpulsen vorgesehen sein, die z.B. durch Schaltvorgänge oder auch durch atmosphärische Entladungen verursacht werden. Man hat dazu bisher an den Teilnehmeranschlußleitungen, die oft überirdisch verlegt sind, Überspannungsableiter vorgesehen, die verhindern, daß durch solche Störimpulse verursachte Überspannungen in der Zentrale wirksam werden und dort gegebenenfalls Schaltelemente beschädigen. Dies ist mit einem erheblichen Aufwand verbunden, denn jede mit einer Teilnehmerstationsschaltung verbundene Leitungsader benötigt einen Überspannungsableiter. Dadurch ergeben sich erhebliche Installationskosten sowie entsprechender Raumbedarf, insbesondere bei solchen Anlagen, in denen die Teilnehmeranschlußschaltungen auf Leiterplatten gegebenenfalls gruppenweise zusammengefaßt sind.

Es ist Aufgabe der Erfindung, eine Einrichtung anzugeben, durch deren Aufbau die an jeder Ader einer Teilnehmeranschlußleitung erforderlichen Überspannungsableiter überflüssig werden.

Ausgehend von einer Einrichtung eingangs genannter Art löst die Erfindung diese Aufgabe dadurch, daß Halbleiterschalter mit einer kritischen Spannungssteilheit im Bereich abzuleitender Störimpulse dienen, und daß die jeweilige Anschlußleitung für die Rufwechselspannung durch eine Überspannungsableitung mit Erde verbunden ist.

Die Erfindung beruht auf der Erkenntnis, daß bei Verwendung von Halbleiterschaltern zum Schalten der Rufwechselspannung eine charakteristische Eigenschaft vorhanden ist, die sich zur Beseitigung von Überspannungen nutzen läßt. Bekanntlich haben Halbleiterschalter die Eigenschaft, bei sehr schnellem Anstieg einer ihnen zugeführten Spannung in den leitenden Zustand überzugehen. Wenn diese kritische Spannungssteilheit eines Halbleiterschalters im Bereich abzuleitender Störimpulse liegt, so kann der Halbleiterschalter als Schaltelement dienen, das solche Störimpulse durchschaltet. Wenn der Halbleiterschalter zum Schalten der Rufwechselspannung an Teilnehmeranschlußleitungen dient, so schaltet er also die Störimpulse auf die Leitung durch, über die die Rufwechselspannung zugeführt wird. Es ergibt sich dann eine Doppelfunktion des Halbleiterschalters, die die Verwendung besonderer Überspannungsableiter an den Teilnehmeranschlußleitungen erübrigt, sofern die Anschlußleitung für die Rufwechselspannung durch eine Überspannungsableitung mit Erde verbunden ist, wie es die Erfindung vorsieht.

Der wesentliche Vorteil der Erfindung besteht nicht nur in der Einsparung der Überspannungsableiter an den Teilnehmeranschlußleitungen, sondern in einer weiteren Reduzierung des Gesamtaufwandes, denn in Telekommunikationsanlagen ist der die Rufwechselspannung erzeugende Generator immer mit mehreren Teilnehmeranschlußschaltungen verbunden. Dadurch eröffnet sich die Möglichkeit, für mehrere Teilnehmeranschlußschaltungen gemeinsame Überspannungsableiter zu verwenden.

Vorteilhaft dient als optisch gekoppelter Halbleiterschalter jeweils ein optisch gekoppelter bidirektionaler Thyristor (TRIAC) mit einem nachgeschalteten bidirektionalen Thyristor. Dadurch ist es möglich, das Prinzip der optischen Kopplung auch in Verbindung mit Schaltelementen hoher Stromleitfähigkeit anzuwenden.

In modernen Telekommunikationsanlagen sind mehrere Teilnehmeranschlußleitungen meist gruppenweise auf ein und demselben Schaltungsträger zusammengefaßt. In diesem Fall ist die Einrichtung vorteilhaft derart aufgebaut, daß bei gruppenweise zusammengefaßten Teilnehmeranschlußschaltungen für jede Gruppe eine Überspannungsableitung vorgesehen ist. Dadurch wird verhindert, daß abzuleitende Störimpulse von einem Schaltungsträger auf den anderen übertragen werden, bevor sie abgeleitet werden. Zweckmäßig sind dann die zu den Gruppen führenden Anschlußleitungsteile für die Rufwechselspannung gegeneinander durch ohmsche Widerstände entkoppelt. Dadurch wird die Rückwirkung von Störimpulsen auf benachbarte Schaltungsträger weiter reduziert.

In Telekommunikationsanlagen der hier betrachteten Art ist in der Teilnehmeranschlußschaltung eine Anordnung erforderlich, mit der das Anschalten der Teilnehmerstation an die Teilnehmeranschlußschaltung erkannt wird, um beim Anschalten der Teilnehmerstation die Rufwechselspannung von der Teilnehmeranschlußleitung abzuschalten. Dies kann durch eine Spannungs- oder Stromauswertung an der Teilnehmerschleife geschehen. Um im Falle der Verwendung einer Stromauswertung bei fehlenden Überspannungsableitern an der Teilnehmeranschlußleitung besondere Schutzmaßnahmen an einer Schleifenstromerkennungsschaltung zu vermeiden, ist die Einrichtung nach der Erfindung derart weiter ausgebildet, daß eine das Abschalten der Rufwechselspannung von der Teilnehmeranschlußleitung bewirkende Schleifenstromerkennungsschaltung auf der der Teilnehmeranschlußleitung abgewandten Seite der Halbleiterschalter im Speisestromweg angeordnet ist.

Durch diese Weiterbildung wird erreicht, daß Störimpulse, die über die Teilnehmeranschlußleitung zur Teilnehmerschaltung gelangen, über die Halbleiterschalter abgeleitet werden, ohne daß die von ihnen erzeugten Ströme über die Schleifenstromerkennungsschaltung fließen und diese gegebenenfalls beschädigen.

Bei der zuvor beschriebenen Weiterbildung der Erfindung kann das Fließen des Schleifenstroms an der Teilnehmerstation während der Einspeisung der Rufwechselspannung nicht erkannt werden, da während dieser Einspeisung der an der Teilnehmerstation geschlossene Schleifenstrom, der aus dem Rufwechselspannungsgenerator geliefert wird, über die Halbleiterschalter fließt.Das Schließen der Schleife kann dann nur während der Rufwechselspannungspausen erkannt werden. Um dieses Erkennen auch während der Einspeisung der Rufwechselspannung zu ermöglichen, wird in einer Weiterbildung der Erfindung der Speisestrom in mindestens einem Nulldurchgang der an die Teilnehmeranschlußleitung angeschalteten Rufwechselspannung kurzzeitig eingeschaltet. Dadurch wird erreicht, daß bei geschlossener Schleife und eingespeister Rufwechselspannung auch der eigentliche Speisegleichstrom kurzzeitig fließen kann und somit der Schleifenstrom erkannt wird.

Wenn zum Schalten des Speisestroms Thyristoren vorgesehen sind, wie dies z.B. bei dem eingangs genannten Stand der Technik der Fall ist, so erfolgt das kurzzeitige Einschalten vorteilhaft bei einem Nulldurchgang, durch dessen Stromrichtungswechsel die Thyristoren selbsttätig abgeschaltet werden. Dadurch ergibt sich eine automatische Bemessung der Zeit, für die die Thyristoren kurzzeitig eingeschaltet werden.

Ein Ausführungsbeispiel einer Einrichtung nach der Erfindung wird im folgenden an Hand der Zeichnung näher erläutert. Es zeigen:
- Fig. 1: eine Teilnehmeranschlußschaltung mit Rufsignalgenerator,
- Fig. 2: eine in der Teilnehmerschaltung nach Fig. 1 verwendete Steuerschaltung für Halbleiterschalter und
- Fig. 3: Signalverläufe in den in Fig. 1 und 2 gezeigten Schaltungen.

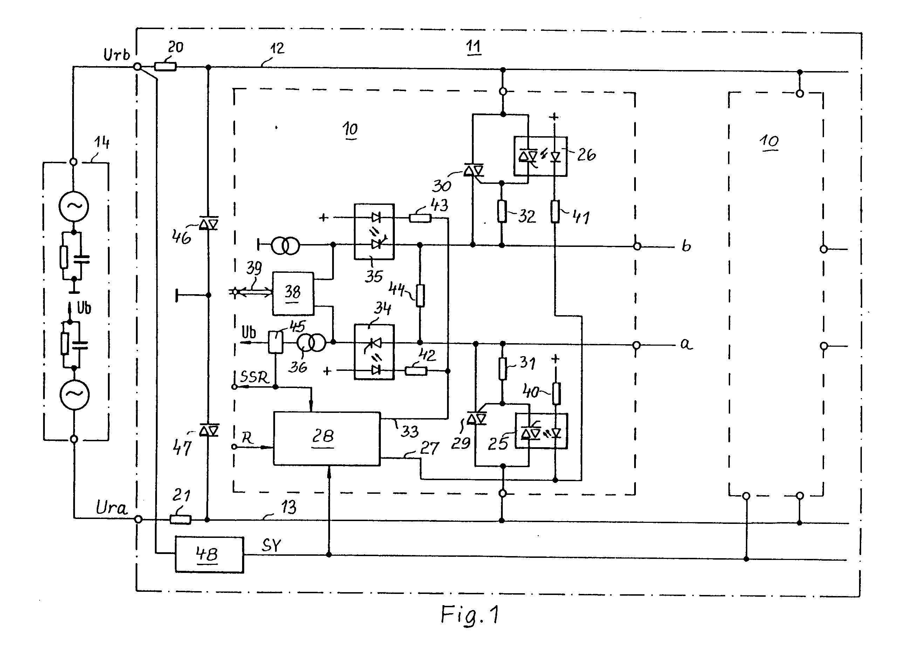

In Fig. 1 ist eine Teilnehmeranschlußschaltung 10 dargestellt, die zusammen mit weiteren Teilnehmeranschlußschaltungen 10, von denen eine angedeutet ist, auf einem Schaltungsträger 11 angeordnet ist. Die Teilnehmeranschlußschaltungen 10 sind durch gestrichelte Linien abgegrenzt, und der Schaltungsträger 11 ist durch eine strichpunktierte Linie angedeutet. Die Teilnehmeranschlußschaltungen 10 werden auf dem Schaltungsträger 11 über die beiden Adern 12 und 13 einer Rufwechselspannungsleitung aus einem Rufwechselspannungsgenerator 14 mit Rufwechselspannungen Urb und Ura gespeist, die in noch zu beschreibender Weise den Adern b und a der weiter nicht dargestellten Teilnehmeranschlußleitung zugeführt werden. Der Rufwechselspannungsgenerator 14 enthält zwei Quellen für gegenphasige Wechselspannungen, wie dies für die symmetrische Einspeisung der Rufwechselspannungen auf Teilnehmeranschlußleitungen an sich bekannt ist.

Die Rufwechselspannung wird über Entkopplungswiderstände 20 und 21 auf die Adern 12 und 13 geführt. Die Entkopplungswiderstände 20 und 21 verhindern Rückwirkungen von Störimpulsen, die auf den Adern 12 und 13 in noch zu beschreibender Weise auftreten, auf andere, gleichfalls mit dem Rufwechselspannungsgenerator 14 verbundene Teilnehmeranschlußschaltungen, die in Fig. 1 nicht dargestellt sind.

Die Rufwechselspannung Ura bzw. Urb wird auf die jeweilige Ader a bzw. b der Teilnehmeranschlußschaltung über einen optisch gekoppelten TRIAC 25 bzw. 26 geführt. Die Leuchtdiode des jeweiligen TRIACs 25 bzw. 26 wird hierzu über eine Steuerleitung 27 im Rufrhythmus aus einer Steuerschaltung 28 angesteuert, die ihrerseits mit Rufsignalen R aus der zentralen Steuerung (nicht dargestellt) der Telekommunikationsanlage angesteuert wird. Die TRIACs 25 und 26 steuern jeweils die Steuerelektrode eines TRIACs 29 bzw. 30 an, der die Ader a bzw. b der Teilnehmeranschlußleitung mit der Ader 13 bzw. 12 der Anschlußleitung für die Rufwechselspannungen Ura und Urb verbindet. Die jeweilige Steuerelektrode ist über einen Widerstand 31 bzw. 32 mit der Ader a bzw. b der Teilnehmeranschlußleitung verbunden. Mit diesen Widerständen 31 und 32 wird bei gesperrtem TRIAC 25 bzw. 26 ein definierter Schaltzustand des jeweiligen TRIACs 29 bzw. 30 erreicht.

Die Steuerschaltung 28 liefert weitere Steuersignale über eine Steuerleitung 33 an zwei optisch gekoppelte Thyristoren 34 und 35, mit denen den Adern a und b der Teilnehmeranschlußleitung der Speisegleichstrom aus zwei Stromquellen 36 und 37 zugeführt wird. Zwischen den Stromquellen 36 und 37 und den Thyristoren 34 und 35 ist die Teilnehmerschleife mit einer Einkoppelschaltung 38 für Sprachsignale verbunden, die ihr über einen Signalweg 39 zugeführt werden.

Die Leuchtdioden der zuvor beschriebenen optisch gekoppelten Halbleiterschalter 25, 26, 34 und 35 sind jeweils mit einem ohmschen Widerstand 40, 41, 42, 43 in Reihe geschaltet, der als Strombegrenzungswiderstand dient und den Arbeitspunkt der jeweiligen Leuchtdiode festlegt.

Die Adern a und b sind innerhalb der Teilnehmeranschlußschaltung vor den optisch gekoppelten Thyristoren 34 und 35 über einen Widerstand 44 miteinander verbunden, der einen Ruhestromfluß durch die Thyristoren 34 und 35 bewirkt, welcher so bemessen ist, daß die Thyristoren 34 und 35 auch bei geöffneter Schleife von einem Haltestrom durchflossen werden.

Die Steuerschaltung 28 veranlaßt, daß die Halbleiterschalter 25 und 26 und die Halbleiterschalter 34 und 35 wie zwei Umschalter arbeiten, um in an sich bekannter Weise abwechselnd die Rufwechselspannung und den Speisegleichstrom auf die Adern a und b der Teilnehmeranschlußleitung zu schalten.

In die Verbindung der Stromquelle 36 mit der negativen Betriebsspannung Ub ist eine Stromerkennungsschaltung 45 eingeschleift, die ein Ausgangssignal SSR an die Steuerschaltung 28 und an die zentrale Steuerung (nicht dargestellt) abgibt. Dieses Ausgangssignal kennzeichnet den geschlossenen Zustand der über die Adern a und b der Teilnehmeranschlußleitung verlaufenden Schleife, der durch Anschalten der Teilnehmerstation an die Teilnehmeranschlußleitung hervorgerufen wird.

Die beiden Adern 12 und 13 der Anschlußleitung für die Rufwechselspannungen Urb und Ura sind vor den Entkopplungswiderständen 20 und 21 jeweils über einen Überspannungsableiter 46 bzw. 47 mit Erde verbunden.

Die Rufwechselspannung Urb ist mit einem Nulldurchgangsdetektor 48 verbunden, der ein Signal SY an einen Steuereingang der Steuerschaltung 28 einer jeden Teilnehmeranschlußschaltung 10 liefert. Der Nulldurchgangsdetektor 48 ist so aufgebaut, daß er ein Signal SY immer dann liefert, wenn die Rufwechselspannung Urb einen Nulldurchgang von negativer zu positiver Stromrichtung hat.

Die beiden TRIACs 29 und 30 sind von einem Typ, dessen kritische Spannungssteilheit im Bereich abzuleitender Störimpulse liegt. Wenn solche Störimpulse auf den Adern a und b der Teilnehmeranschlußleitung auftreten, so bewirken diese durch die Geschwindigkeit ihres Spannungsanstiegs, daß die TRIACs 29 und 30 in den leitenden Zustand übergehen und die Störimpulse auf die Adern 12 und 13 der Anschlußleitung für die Rufwechselspannungen Urb und Ura durchschalten. Die Störimpulse werden dann über die Überspannungsableiter 46 und 47 nach Erde abgeleitet.

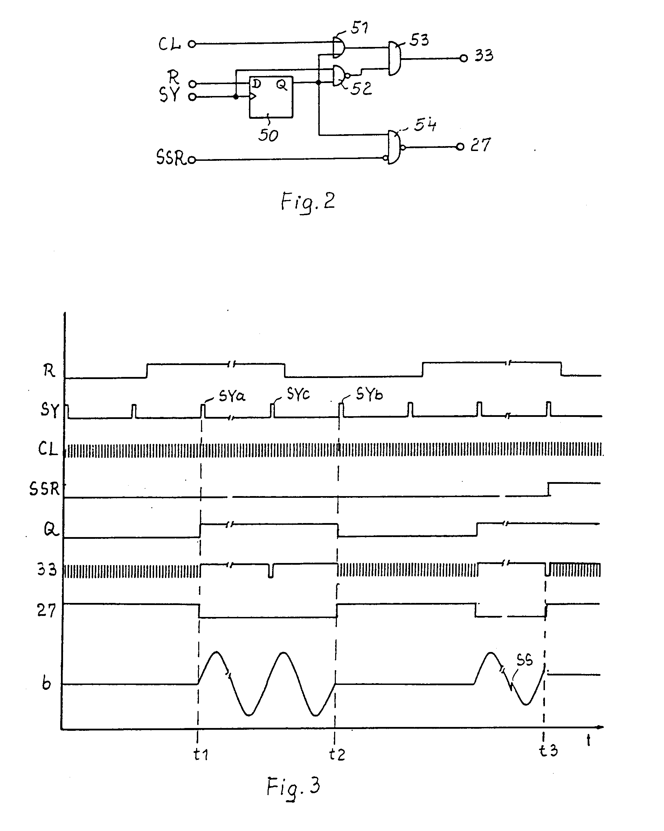

Fig. 2 zeigt den prinzipiellen Aufbau der Steuerschaltung 28, die in Fig. 1 dargestellt ist. Außer den Signalen R, SY und SSR werden dieser Schaltung noch Taktimpulse CL zugeführt. Die Schaltung enthält ein D-Flipflop 50, ein ODER-Glied 51, ein NAND-Glied 52, ein UND-Glied 53 und ein NAND-Glied 54. Die Signale SY steuern den Takteingang des D-Flipflops 50 sowie den einen Eingang des NAND-Gliedes 52 an. Die Signale R sind dem Eingang D des D-Flipflops 50 zugeführt. Das Ausgangssignal Q des D-Flipflops 50 wird mit den Signalen SY in dem NAND-Glied 52 verknüpft. Ferner wird es mit den Taktimpulsen CL in dem ODER-Glied 51 verknüpft. Die Ausgangssignale der Glieder 51 und 52 werden in dem UND-Glied 53 verknüpft und ergeben die Steuersignale, die den optisch gekoppelten Thyristoren 34 und 35 zugeführt werden. Entsprechend ist der Ausgang des UND-Gliedes 53 mit 33 bezeichnet, um die Verbindung mit der in Fig. 1 gezeigten Steuerleitung 33 anzudeuten.

Das Ausgangssignal Q des D-Flipflops 50 wird ferner mit dem Ausgangssignal SSR der Schleifenstromerkennungsschaltung 45 (Fig. 1) in dem NAND-Glied 54 verknüpft, dessen einer Eingang ein invertierender Eingang ist. Es liefert die Steuersignale für die optisch gekoppelten TRIACs 25 und 26. Entsprechend ist sein Ausgang mit 27 bezeichnet, um die Verbindung mit der in Fig. 1 gezeigten Steuerleitung 27 anzudeuten.

In Fig. 3 sind Signalverläufe der Schaltungsanordnungen nach Fig. 1 und 2 dargestellt. Das Signal R ist ein impulsförmiges Signal, das der Steuerschaltung 28 von der zentralen Steuerung der Telekommunikationsanlage zugeführt wird und den Rhythmus bestimmt, mit dem die Rufwechselspannungen Ura und Urb auf die Teilnehmeranschlußleitung geschaltet werden. In Fig. 3 sind zwei derartige Anschalteimpulse gezeigt. Das Ausgangssignal SY des Nulldurchgangsdetektors 48 ist gleichfalls impulsförmig und kennzeichnet jeweils einen Nulldurchgang der Rufwechselspannung Urb von negativer in positive Richtung. Teile dieser Rufwechselspannung Urb sind in Fig. 3 bei b dargestellt, wie sie auf die Ader b der Teilnehmeranschlußleitung geschaltet werden. Die Taktsignale CL bewirken eine impulsartige Ansteuerung der Leuchtdioden der optisch gekoppelten Thyristoren 34 und 35, so daß sie auch die Gestalt der Steuersignale wiedergeben, die diesen Thyristoren 34 und 35 über die Steuerleitung 33 zugeführt werden. Diese Impulssteuerung der Leuchtdioden verlängert die Lebensdauer der optisch gekoppelten Thyristoren 34 und 35.

Das Ausgangssignal SSR erscheint für das in Fig. 3 gezeigte Beispiel zum Zeitpunkt t3, zu dem nach Abheben des Handapparates bei der Teilnehmerstation die Schleife geschlossen und in der Stromerkennungsschaltung der Schleifenschluß erkannt wird.

Das Ausgangssignal Q des D-Flipflops 50 erscheint zum Zeitpunkt eines positiven Nulldurchgangs der Rufwechselspannung Urb, der durch einen entsprechenden Impuls SYa gekennzeichnet ist, zum Zeitpunkt t1. Es endet zum Zeitpunkt t2 mit dem ersten Impuls SYb nach Fortfall des Signals R. Damit wird die Synchronisierfunktion des D-Flipflops 50 erkennbar, das das Steuersignal R mit den Impulsen SY synchronisiert. Durch die in Fig. 2 dargestellte Verknüpfung des Ausgangssignals Q des D-Flipflops 50 mit dem Ausgangssignal SSR der Schleifenstromerkennungsschaltung 45 entsteht das in Fig. 3 mit 27 bezeichnete Ausgangssignal des NAND-Gliedes 54 das gegenphasig zu dem Signal Q ist. Es schaltet die optisch gekoppelten TRIACs 25 und 26 leitend, so daß die Rufwechselspannung Urb gemäß der Darstellung b in Fig. 3 vom Zeitpunkt t1 bis zum Zeitpunkt t2 auf die Ader b der Teilnehmeranschlußleitung geschaltet wird. Ebenso wird in nicht dargestellter Weise die Rufwechselspannung Ura auf die Ader a der Teilnehmeranschlußleitung geschaltet.

Die vorstehend beschriebenen Vorgänge wiederholen sich für den in Fig. 3 dargestellten zweiten Impuls des Steuersignals R bis zum Zeitpunkt t3, zu dem der Schleifenschluß erkannt wird.

In Fig. 3 ist ferner ein Signalverlauf 33 dargestellt, der auf der Steuerleitung 33 (Fig. 1) für die optisch gekoppelten Thyristoren 34 und 35 erscheint. Dieser Signalverlauf ist entsprechend den Taktimpulsen CL zunächst impulsförmig und erhält dann bei Erscheinen des Ausgangssignals Q des D-Flipflops 50 den Dauerwert Logisch 1. Dies ist auf das Fehlen von Impulsen SY zurückzuführen, das durch Verknüpfung mit dem Ausgangssignal Q am Ausgang des NAND-Gliedes 52 zum Zustand Logisch 1 führt, der zusammen mit dem Zustand Logisch 1 am Ausgang des ODER-Gliedes 51 den Zustand Logisch 1 am Ausgang des UND-Gliedes 53 ergibt. Erst bei Erscheinen eines Impulses SYc wird der Zustand Logisch 1 des Ausgangssignals 33 des UND-Gliedes 53 kurzzeitig unterbrochen, wodurch die Leuchtdioden der optisch gekoppelten Thyristoren 34 und 35 kurzzeitig eingeschaltet werden. Dadurch wird die Gleichstromspeisung aus den Quellen 36 und 37 entsprechend kurzzeitig auf die Adern a und b der Teilnehmeranschlußleitung geschaltet. Der Effekt dieses Schaltvorgangs besteht darin, daß während der jeweiligen Anschaltung der Rufwechselspannung Ura bzw. Urb an die beiden Adern a und b der Teilnehmeranschlußleitung kurzzeitig auch Schleifenstrom fließen kann, sofern die Schleife bei der Teilnehmerstation geschlossen ist. Dadurch ist es möglich, den Schleifenschluß auch während der Einspeisung von Rufwechselspannung auf die Teilnehmeranschlußleitung zu erkennen und entsprechende Schaltmaßnahmen in der zentralen Steuerung auszulösen. Ein solcher Schleifenschluß ist in Figur 3 bei b in dem rechten Teil des Signalverlaufs zu erkennen, wo ein Signalsprung SS stattfindet, der durch den mit dem Schleifenschluß fließenden Gleichstrom verursacht wird. Der Schleifenschluß führt dann mit dem erneuten kurzzeitigen Durchschalten der optisch gekoppelten Thyristoren 34 und 35 zum Zeitpunkt t3 zum Erkennen des Schleifenstroms, wodurch das Signal SSR von Logisch 0 auf Logisch 1 wechselt und die zentrale Steuerung das Abschalten der Rufwechselspannungen Ura und Urb von den Adern a und b der Teilnehmeranschlußleitung veranlaßt, wie dies in Figur 3 bei b zum Zeitpunkt t3 gezeigt ist.

## Patentansprüche

1. Einrichtung zum Schalten der Rufwechselspannung an Teilnehmeranschlußleitungen in Telekommunikationsanlagen mit optisch gekoppelten Halbleiterschaltern, dadurch **gekennzeichnet,** daß Halbleiterschalter (25, 26, 29, 30) mit einer kritischen Spannungssteilheit im Bereich abzuleitender Störimpulse dienen, und daß die jeweilige Anschlußleitung (12, 13) für die Rufwechselspannung durch eine Überspannungsableitung (46, 47) mit Erde verbunden ist.

2. Einrichtung nach Anspruch 1, dadurch **gekennzeichnet,** daß als optisch gekoppelter Halbleiterschalter jeweils ein optisch gekoppelter bidirektionaler Thyristor (TRIAC 25, 26) mit einem nachgeschalteten bidirektionalen Thyristor (TRIAC 29, 30) vorgesehen ist.

3. Einrichtung nach Anspruch 1 oder 2, dadurch **gekennzeichnet,** daß bei gruppenweise zusammengefaßten Teilnehmeranschlußschaltungen (10) für jede Gruppe eine Überspannungsableitung (46, 47) vorgesehen ist.

4. Einrichtung nach Anspruch 3, dadurch **gekennzeichnet,** daß die zu den Gruppen führenden Anschlußleitungsteile (12, 13) für die Rufwechselspannung gegeneinander durch ohmsche Widerstände (20, 21) entkoppelt sind.

5. Einrichtung nach einem der vorhergehenden Ansprüche, dadurch **gekennzeichnet,** daß eine das Abschalten der Rufwechselspannung von der Teilnehmeranschlußleitung bewirkende Schleifenstromerkennungsschal tung auf der der Teilnehmeranschlußleitung (a, b) abgewandten Seite der Halbleiterschalter (25, 26, 29, 30) im Speisestromweg angeordnet ist.

6. Einrichtung nach Anspruch 5, dadurch **gekennzeichnet,** daß der Speisestrom in mindestens einem Nulldurchgang der an die Teilnehmeranschlußleitung (a, b) angeschalteten Rufwechselspannung kurzzeitig eingeschaltet wird.

7. Einrichtung nach Anspruch 6, mit zum Schalten des Speisestroms vorgesehenen Thyristoren, dadurch **gekennzeichnet,** daß das kurzzeitige Einschalten bei einem Nulldurchgang erfolgt, durch dessen Stromrichtungswechsel die Thyristoren (34, 35) selbsttätig abgeschaltet werden.

## Claims

1. Device for switching the ringing AC voltage to subscriber connecting lines in telecommunications systems having optically coupled semiconductor switches, characterised in that semiconductor switches (25, 26, 29, 30) having a critical voltage gradient are used in the region of current pulses which are to be suppressed, and in that the respective connecting line (12, 13) for the ringing AC voltage is connected through an overvoltage suppressor (46, 47) to earth.

2. Device according to Claim 1, characterised in that in each case one optically coupled bidirectional thyristor (TRIAC 25, 26), having a downstream-connected bidirectional thyristor (TRIAC 29, 30), is provided as the optically coupled semiconductor switch.

3. Device according to Claim 1 or 2, characterised in that, in the case of subscriber connecting circuits (10) which are combined in groups, one overvoltage suppressor (46, 47) is provided for each group.

4. Device according to Claim 3, characterised in that the connecting-line parts (12, 13), which lead to the groups, for the ringing AC voltage are decoupled from one another by resistors (20, 21).

5. Device according to one of the preceding claims, characterised in that a loop-current recognition circuit, which causes the disconnection of the ringing AC voltage from the subscriber connecting line, is arranged in the supply current path on the side of the semiconductor switches (25, 26, 29, 30) facing away from the subscriber connecting line (a, b).

6. Device according to Claim 5, characterised in that the supply current is briefly switched on in at least one zero crossover of the ringing AC voltage which is connected to the subscriber connecting line (a, b).

7. Device according to Claim 6, having thyristors which are provided for switching the supply current, characterised in that the brief switching-on takes place at a zero crossover as a result of whose current-direction change the thyristors (34, 35) are automatically switched off.

## Revendications

1. Dispositif pour commuter ou appliquer la tension alternative d'appel à des lignes d'abonnés d'installations de télécommunication comportant des interrupteurs à semiconducteurs couplés optiquement, caractérisé par le fait que des interrupteurs à semiconducteurs (25,26,29,30) possédant une pente de tension critique sont utilisés dans le domaine d'impulsions parasites devant être évacuées, et que la ligne respective de raccordement (12,13) pour la tension alternative d'appel est raccordée à la terre par l'intermédiaire d'un dispositif (46,47) de dérivation des surtensions.

2. Dispositif suivant la revendication 1, caractérisé par le fait qu'il est prévu comme interrupteur à semiconducteurs couplé optiquement, respectivement un thyristor bidirectionnel (TRIAC 25,26) couplé optiquement et en aval duquel est branché un thyristor bidirectionnel (TRIAC 29, 30).

3. Dispositif suivant la revendication 1 ou 2, caractérisé par le fait que dans le cas de circuits de raccordement d'abonnés (10) réunis par groupes, il est prévu pour chaque groupe un dispositif (46,47) de dérivation des surtensions.

4. Dispositif suivant la revendication 3, caractérisé par le fait que les éléments de ligne de raccordement (12,13), qui aboutissent aux groupes, pour la tension alternative d'appel sont découplés réciproquement par des résistances ohmiques (20,21).

5. Dispositif suivant l'une des revendications précédentes, caractérisé par le fait qu'un circuit d'identification du courant de boucle, qui déclenche l'interruption de la tension d'alimentation d'appel dans la ligne d'abonné, est disposé dans la voie de circulation du courant d'alimentation, sur le côté, situé à l'opposé de la ligne d'abonné (a,b), des interrupteurs à semiconducteurs (25,26,29,30).

6. Dispositif suivant la revendication 5, caractérisé par le fait que le courant d'alimentation est appliqué pendant un bref intervalle de temps pendant au moins un passage par zéro de la tension alternative d'appel appliquée à la ligne d'abonné (a,b).

7. Dispositif suivant la revendication 6, comportant des thyristors prévus pour la commutation du courant d'alimentation, caractérisé par le fait que l'application du courant d'alimentation pendant une brève durée s'effectue lors d'un passage par zéro, lors duquel le changement de sens du courant place automatiquement les thyristors (34,35) à l'état bloqué.
